# FASCICULE DE BREVET EUROPEEN

(11) **EP 1 794 489 B1**
(45) Date de publication et mention de la délivrance du brevet: **10.11.2010**
(21) Numéro de dépôt: 05800240.3
(22) Date de dépôt: 23.09.2005
(51) Int. Cl.: F16M 1/025

(54) **PALIER DE VILEBREQUIN EQUIPE D'UN INSERT ET INSERT CORRESPONDANT**
MIT EINEM EINSATZ AUSGERÜSTETES KURBELWELLENLAGER UND ENTSPRECHENDER EINSATZ
CRANKSHAFT BEARING EQUIPPED WITH AN INSERT AND CORRESPONDING INSERT

(30) Priorité: 23.09.2004 FR 0410045
(43) Date de publication de la demande: 13.06.2007
(73) Titulaire: RENAULT S.A.S., 92100 Boulogne Billancourt (FR)
(72) Inventeur: KALOS, Thomas, F-75013 PARIS (FR); SEBIRE, Olivier, F-78800 HOUILLES (FR)
(86) Numéro de dépôt international: PCT/FR2005/050771
(87) Numéro de publication internationale: WO 2006/032822

(56) Documents cités:
- DE-A1- 10 026 216
- DE-A1- 19 949 965
- DE-B3- 10 246 522
- US-A- 4 693 216
- US-A- 5 816 710

## Description

La présente invention relève du domaine des moteurs à combustion interne, plus particulièrement des paliers pour vilebrequin de moteurs à combustion interne.

De façon générale, un moteur à combustion interne comprend un certain nombre de cylindres, par exemple trois, quatre, six ou huit, disposés en ligne, en V, ou encore à plat à 180°. Les pistons disposés dans les cylindres peuvent se déplacer en translation et sont reliés chacun à une bielle, elle-même reliée à un vilebrequin. L'ensemble bielle et vilebrequin permet de transformer le mouvement de translation des pistons en un mouvement rotatif. Un vilebrequin comprend des manetons en contact avec les têtes de bielle, des tourillons présentant une surface extérieure cylindrique centrée sur l'axe de rotation du vilebrequin et des flasques reliant un maneton à un tourillon. Les tourillons sont montés à rotation dans des paliers formés, pour une partie, par le carter du moteur et, pour une autre partie, par un chapeau de palier fixé au carter de façon démontable.

Les carters de moteurs sont de plus en plus souvent réalisés en alliage léger à base d'aluminium. Or, les paliers de vilebrequin doivent reprendre des efforts importants qui peuvent s'avérer difficiles à reprendre dans l'alliage léger constituant le carter.

Le document DE-C-195 45 000 (Porsche) décrit un insert prévu dans le chapeau de palier et traversé par des trous lisses pour les vis de fixation du chapeau. Toutefois, le carter du moteur n'est pas renforcé et la tenue des vis coopérant avec des filets formés dans l'alliage léger peut être problématique ou conduire à un surdimensionnement des vis néfaste en terme de masse et de coût d'usinage.

Le document US 5 769, 546 (Porsche) décrit un insert de carter-moteur pourvu de trous lisses de traversée des vis de fixation du chapeau de palier.

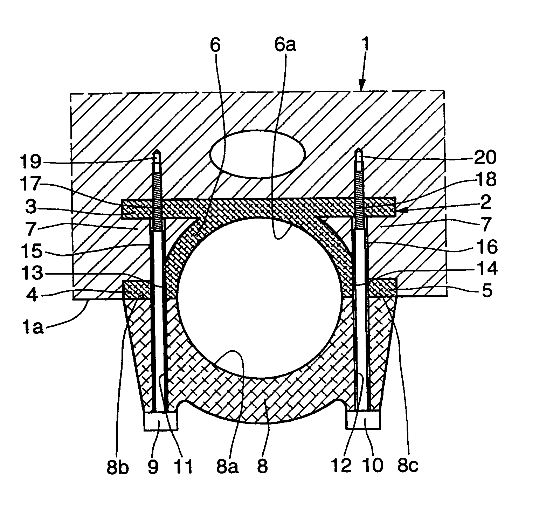

Le document US 5 816 710 (Cummins) décrit, en référence aux figures 1 et 2, un insert complètement noyé dans l'alliage léger et de forme massive. L'insert est alors difficile positionner dans le moule où est coulé l'alliage léger et s'avère, en outre, encombrant et de masse élevé.

En référence à la figure 3, ce document décrit un insert disposé à la surface du carter en alliage léger. L'insert est pourvu de trous taraudés prévus pour coopérer avec des vis de fixation du chapeau de palier. Un tel insert présente une masse et un encombrement élevés et doit transmettre des efforts au reste du carter en alliage léger par le seul lien métallurgique des surfaces en contact.

Le document DE-100 26 216 décrit un carter de moteur, un support de palier de vilebrequin selon le préambule de la revendication 1 et un insert pour palier de vilebrequin selon le préambule de la revendication 10.

La présente invention vise à remédier aux inconvénients évoqués ci-dessus par moyen d'un palier de vilebrequin selon la revendication 1 et d'un insert pour palier de vilebrequin selon la revendication 10.

La présente invention propose un insert pour palier de vilebrequin de forme simple, permettant une excellente transmission des efforts au carter en alliage léger tout en assurant une retenue solide des vis de chapeau de palier.

Le palier de vilebrequin, selon un aspect de l'invention, comprend un insert disposé dans une pièce en alliage léger et pourvu d'une surface cylindrique concave, un chapeau et des vis de fixation du chapeau, lesdites vis étant en engagement dans des trous ménagés dans la pièce en alliage léger. L'insert comprend une partie en contact avec le chapeau et une partie noyée dans la pièce en alliage léger, la partie noyée étant traversée par au moins un desdits trous et étant taraudée. L'insert peut être de masse relativement faible.

Avantageusement, la partie en contact avec le chapeau et la partie noyée se présentent sous la forme de pattes disposées à distance l'une de l'autre. L'insert est solidaire de la pièce en alliage léger par liaison métallurgique et par complémentarité de formes.

Dans un mode de réalisation de l'invention, les trous ménagés dans la pièce en alliage léger sont lisses.

Dans un autre mode de réalisation de l'invention, les trous ménagés dans la pièce en alliage léger sont taraudés.

Avantageusement, la partie en contact avec le chapeau est traversée par au moins une desdites vis.

Dans un mode de réalisation de l'invention, au moins un desdits trous taraudés est ménagé à la fois dans la partie noyée et dans l'alliage léger.

Dans un autre mode de réalisation de l'invention, au moins un desdits trous taraudés est ménagé seulement dans la partie noyée de l'insert.

Dans un mode de réalisation de l'invention, la partie noyée et la partie en contact avec le chapeau sont parallèles, au moins en partie.

Avantageusement, la partie noyée et la partie en contact avec le chapeau sont reliées par une partie arrondie pourvue de ladite surface cylindrique concave prévue pour supporter un tourillon de vilebrequin.

Dans un mode de réalisation de l'invention, au moins un desdits trous taraudés est lisse de l'orifice jusqu'à la partie noyée et pourvu de filets dans la partie noyée et au moins en partie au-delà vers le fond dudit trou.

Dans un mode de réalisation de l'invention, il est prévu deux vis par chapeau de vilebrequin.

Dans un autre mode de réalisation de l'invention, il est prévu quatre vis par chapeau de vilebrequin.

Dans un mode de réalisation de l'invention, l'insert est en fonte. La pièce en alliage léger est en alliage à base d'aluminium.

L'invention concerne également un insert pour palier de vilebrequin, prévu pour être disposé dans une pièce en alliage léger. L'insert comprend une partie extérieure pourvue d'au moins une surface plane et traversée par au moins un trou lisse, une partie intérieure distante de la partie extérieure et traversée par au moins un trou taraudé aligné sur le trou lisse. Ainsi, une partie de la pièce en alliage léger est disposée entre la partie intérieure et la partie extérieure de l'insert qui est ainsi parfaitement solidarisé avec la pièce en alliage léger. Le trou taraudé formé dans la partie intérieure est prévu pour coopérer avec des vis de fixation de chapeau de palier et assure une excellente transmission des efforts mécaniques des vis sur la partie intérieure de l'insert et de la partie intérieure de l'insert vers la pièce en alliage léger, tout en évitant une transmission importante d'efforts sur des filets en alliage léger relativement fragiles et tout en évitant les risques de désolidarisation des inserts qui sont solidarisés avec l'alliage léger de la pièce en alliage léger, à la fois par concordance de forme et par liaison métallurgique lors de la coulée de l'alliage léger sur l'insert.

La présente invention sera mieux comprise à la lecture de la description détaillée d'un mode de réalisation pris à titre d'exemple nullement limitatif et illustré par la figure annexée qui est une vue en coupe axiale de la partie inférieure d'un carter de moteur à combustion interne.

Comme on peut le voir sur la figure unique, le carter 1 est une pièce en alliage léger, par exemple à base d'aluminium et/ou de magnésium. L'insert 2 autour duquel le carter 1 a été coulé, est une pièce métallique dure, par exemple en fonte. L'insert 2 comprend essentiellement une partie noyée ou intérieure 3 disposée dans l'alliage léger du carter 1 et se présentant par exemple sous la forme d'un parallélépipède rectangle de faible épaisseur, d'une partie extérieure se présentant sous la forme de deux pattes 4 et 5, parallèles à la partie intérieure 3 et affleurant une surface extérieure la du carter 1.

Les pattes 4 et 5 sont parallèles à la partie intérieure 3 et peuvent se présenter sous une simple forme de parallélépipède rectangle ayant une largeur du même ordre de grandeur que celle de la partie intérieure 3 et une épaisseur également du même ordre de grandeur. L'insert 1 se complète par une partie de liaison 6, sous la forme d'une portion d'un demi-tube se raccordant par ses extrémités circonférentielles aux pattes extérieures 4 et 5 et par son fond à la partie intérieure 3. L'épaisseur et la largeur de la partie de liaison 6 peuvent être sensiblement égales à celles de la partie intérieure 3 et des pattes extérieures 4 et 5.

En d'autres termes, les pattes 4 et 5 et la partie de liaison 6 présentent une forme générale de lettre grecque oméga majuscule. La surface convexe de la partie de liaison 6 est en contact avec l'alliage léger du carter 1 dans une zone comprise entre la partie intérieure 3 et les pattes extérieures 4 et 5 et est en contact avec la partie intérieure 3 sensiblement dans une zone centrale. Ainsi, le carter 1 comprend des portions 7 prises entre la partie intérieure 3 d'un côté et les pattes extérieures 4 et 5 de l'autre côté. La partie de liaison 6 comprend une surface intérieure 6a semi-circulaire concave dont le centre est situé sensiblement au niveau de la surface extérieure des pattes 4 et 5, et donc de la surface inférieure 1a du carter 1.

Le dispositif se complète par un chapeau de palier 8 pourvu d'une surface intérieure 8a semi-circulaire concave, de diamètre égal à la surface semi-circulaire 6a de la partie de liaison 6 de l'insert 2, de façon telle que les surfaces 6a et 8a forment un alésage pour un tourillon de vilebrequin non représenté. Le chapeau 8a comprend des surfaces 8b et 8c coplanaires, en contact respectivement avec la surface extérieure des pattes 4 et 5. La fixation du chapeau de palier 8 est assurée par deux vis 9 et 10 identiques et passant dans des trous lisses 11 et 12 ménagés dans le chapeau de palier 8 et débouchant sur les surfaces coplanaires 8b et 8c, respectivement. Les vis 9 et 10 passent ensuite dans des trous lisses 13 et 14 ménagés dans les pattes 4 et 5, dans des trous lisses 15 et 16 ménagés dans les portions 7 du carter 1 disposées entre les pattes 4 et 5 et la partie intérieure 3, dans des trous taraudés 17, 18 ménagés dans la partie intérieure 3 de l'insert 2, et enfin dans des trous non débouchants 19 et 20 ménagés dans le carter 1, au-delà de la partie intérieure 3 de l'insert 2. En variante, les trous peuvent être non débouchants.

La forme de l'insert 2 permet d'assurer un excellent contact avec le chapeau de palier 8, par exemple réalisé en métal plus dur que l'alliage léger et évitant ainsi un matage des surfaces en contact, et un excellent maintien de l'insert dans le carter en alliage léger grâce à la forme de la partie intérieure 3 qui s'oppose par complémentarité de forme à toute séparation de l'insert 2 et du carter 1. L'insert 2 fournit une surface semi-circulaire 6a résistant à l'usure pour le montage d'un tourillon ou coussinet de vilebrequin, équipé par exemple d'une bague en bronze, matériau plus dur que l'alliage léger. En outre, on peut utiliser des vis 9 et 10 de diamètre standard équivalent aux vis utilisées pour les carters en fonte grâce à la coopération des filets des vis avec les trous taraudés 17 et 18 de la partie intérieure 3 de l'insert 2. On comprendra que le taraudage des trous 19 et 20, au-delà de la partie intérieure 3, est possible et facultatif.

Les trous 19 et 20, dans le cas où ils sont lisses, servent alors de dégagement aux extrémités des vis 9 et 10 qui peuvent présenter une longueur inférieure à celle illustrée sur la figure. Les vis 9 et 10 comprennent donc des têtes en saillie par rapport au chapeau 8, un corps lisse disposé dans les trous lisses 11 et 12 du chapeau 8, 13 et 14 des pattes 4 et 5 et 15 et 16 des portions 7 du carter 1, et une partie filetée en engagement avec les trous taraudés 17 et 18 de la partie intérieure 3 et, accessoirement, en engagement avec les trous taraudés 19 et 20, tel que représentés sur la figure.

Bien entendu, l'insert 2 est monobloc et constitué d'un matériau ayant un coefficient de dilatation proche de celui du tourillon de vilebrequin et ayant des caractéristiques mécaniques compatibles avec les efforts à transmettre. Le carter 1 est coulé autour de l'insert 2, puis usiné, de telle sorte que le taraudage ne commence pas avant la partie intérieure 3 de l'insert 2. Lors de l'assemblage du chapeau de palier 8, les premiers filets en prise, qui sont également les plus sollicités, sont formés dans le métal dur de l'insert et ne subissent pas de déformation significative. Lors du serrage, l'insert se trouve précontraint dans l'alliage léger, la partie intérieure 3 de l'insert 2 ayant tendance par le serrage à se rapprocher des têtes de vis 9 et 10 et serrant par conséquent les portions 7 en alliage léger du carter 1.

Les efforts transmis au chapeau 8 lors du fonctionnement par le tourillon de vilebrequin s'opposent aux précontraintes existant entre l'insert 2 et le carter 1, évitant ainsi les risques de vibrations, de désolidarisation de l'insert et de rupture de la liaison entre l'insert et le carter restant en compression dans l'axe des efforts. Les efforts sont transmis en cisaillement dans l'alliage léger formant le carter vers les parties latérales du carter, ce qui s'avère particulièrement intéressant pour les moteurs à cylindres disposés en V.

Bien entendu, le chapeau 8 peut être fixé par un nombre de vis plus élevé, par exemple quatre vis, en particulier dans le cas des moteurs en V. Les premiers filets en prise dans la partie noyée 3 de l'insert 2 évitent les risques de foirage des pas de vis et le besoin de surdimensionner les vis.

Un des intérêts des inserts paliers est de limiter la dilatation différentielle tourillon/palier, donc à limiter le jeu à chaud, donc à limiter le débit d'huile aux paliers pour améliorer le rendement du moteur.

L'invention permet donc une robustesse accrue de la partie inférieure du moteur tout en étant plus économique que des inserts présentant des formes compliquées et en diminuant le risque de vibrations néfastes.

## Revendications

1. Palier de vilebrequin, comprenant une pièce en alliage léger (1), un chapeau (8) et un insert (2) disposé dans la pièce en alliage léger et pourvu d'une surface cylindrique concave (6a) et d'une partie (4, 5) en contact avec le chapeau (8), ledit palier comprenant en outre des vis de fixation (9, 10) du chapeau, lesdites vis étant en engagement dans des trous ménagés dans la pièce en alliage léger, l'insert (2) comprenant une partie noyée (3) dans la pièce en alliage léger, **caractérisé par le fait que** la pièce en alliage léger comprend des portions (7) prises entre la partie noyée (3) d'un côté et la partie (4, 5) en contact avec le chapeau (8) de l'autre côté, la partie noyée (3) étant traversée par au moins un trou taraudé ( 17).

2. Palier selon la revendication 1, **caractérisé par le fait que** la partie (4, 5) en contact avec le chapeau est traversée par au moins une desdites vis.

3. Palier selon la revendication 1 ou 2, **caractérisé par le fait qu'**au moins un trou taraudé est ménagé à la fois dans la partie noyée et dans l'alliage léger.

4. Palier selon la revendication 3, **caractérisé par le fait qu'**au moins un desdits trous est lisse de l'orifice jusqu'à la partie noyée, et pourvu de filets dans la partie noyée et au moins en partie au-delà vers le fond dudit trou.

5. Palier selon l'une quelconque des revendications précédentes, **caractérisé par le fait que** la partie noyée (3) et la partie (4, 5) en contact avec le chapeau sont parallèles au moins en partie.

6. Palier selon l'une quelconque des revendications précédentes, **caractérisé par le fait que** la partie noyée (3) et la partie (4, 5) en contact avec le chapeau sont reliées par une partie arrondie (6) pourvue de ladite surface cylindrique concave.

7. Palier selon l'une quelconque des revendications précédentes, **caractérisé par le fait qu'**il comprend deux vis par chapeau.

8. Palier selon l'une quelconque des revendications 1 à 6, **caractérisé par le fait qu'**il comprend quatre vis par chapeau.

9. Palier selon l'une quelconque des revendications précédentes, **caractérisé par le fait que** l'insert (2) est en fonte.

10. Insert (2) pour palier de vilebrequin, prévu pour être disposé dans une pièce en alliage léger (1), et comprenant une partie extérieure (4, 5) pourvue d'au moins une surface plane et traversée par au moins un trou lisse (13), **caractérisé par le fait que** l'insert (2) comprend une partie intérieure (3) distante de la partie extérieure et capable de serrer des portions (7) de la pièce en alliage léger (1), la partie intérieure étant traversée par au moins un trou taraudé (17) aligné sur le trou lisse.

11. Insert selon la revendication précédente, **caractérisé par le fait que** l'insert comprend une partie de liaison (6) pourvue d'une surface cylindrique concave (6a).

## Claims

1. Crankshaft bearing comprising a light alloy component (1), a cap (8) and an insert (2) placed in the light alloy component and provided with a concave cylindrical surface (6a) and with a part (4, 5) in contact with the cap (8), the said bearing further comprising cap-securing screws (9, 10), the said screws being engaged in holes formed in the light alloy component, the insert (2) comprising an embedded part (3) embedded in the light alloy component, **characterized in that** the light alloy component comprises portions (7) sandwiched between the embedded part (3) on the one hand and the part (4, 5) in contact with the cap (8) on the other, the embedded part (3) having at least one tapped hole (17) passing through it.

2. Bearing according to Claim 1, **characterized in that** the part (4, 5) in contact with the cap has at least one of the said screws passing through it.

3. Bearing according to Claim 1 or 2, **characterized in that** at least one tapped hole is formed both in the embedded part and in the light alloy.

4. Bearing according to Claim 3, **characterized in that** at least one of the said holes is plain from the orifice as far as the embedded part, and threaded in the embedded part and at least partially beyond that in the direction towards the closed end of the said hole.

5. Bearing according to any one of the preceding claims, **characterized in that** the embedded part (3) and the part (4, 5) in contact with the cap are at least partially parallel.

6. Bearing according to any one of the preceding claims, **characterized in that** the embedded part (3) and the part (4, 5) in contact with the cap are connected by a rounded part (6) provided with the said concave cylindrical surface.

7. Bearing according to any one of the preceding claims, **characterized in that** it comprises two screws per cap.

8. Bearing according to any one of Claims 1 to 6, **characterized in that** it comprises four screws per cap.

9. Bearing according to any one of the preceding claims, **characterized in that** the insert (2) is made of cast iron.

10. Insert (2) for crankshaft bearing, designed to be placed in a light alloy component (1), and comprising an outer part (4, 5) provided with at least one planar surface and through which at least one plain hole (13) passes, **characterized in that** the insert (2) comprises an inner part (3) distant from the outer part and capable of clamping portions (7) of the light alloy component (1), the inner part having, passing through it, at least one tapped hole (17) that is aligned with the plain hole.

11. Insert according to the preceding claim, **characterized in that** the insert comprises a connecting part (6) provided with a concave cylindrical surface (6a).

## Patentansprüche

1. Kurbelwellenlager, umfassend ein Leichtmetalllegierungsteil (1), eine Kappe (8) und einen Einsatz (2), der in dem Leichtmetalllegierungsteil angeordnet und mit einer konkaven zylindrischen Fläche (6a) und einem mit der Kappe (8) in Kontakt stehenden Teil (4, 5) versehen ist, wobei das Lager des Weiteren Schrauben (9, 10) zur Befestigung der Kappe aufweist, wobei die Schrauben in in das Leichtmetalllegierungsteil ausgebildeten Löchern in Eingriff stehen, wobei der Einsatz (2) einen in dem Leichtmetalllegierungsteil eingebetteten Teil (3) aufweist, **dadurch gekennzeichnet, dass** das Leichtmetalllegierungsteil Abschnitte (7) umfasst, die einerseits zwischen dem eingebetteten Teil (3) und andererseits dem mit der Kappe (8) in Kontakt stehenden Teil (4, 5) in Eingriff genommen sind, wobei der eingebettete Teil (3) von mindestens einem Gewindeloch (17) durchquert wird.

2. Lager nach Anspruch 1, **dadurch gekennzeichnet, dass** der mit der Kappe in Kontakt stehende Teil (4, 5) von mindestens einer der Schrauben durchquert wird.

3. Lager nach Anspruch 1 oder 2, **dadurch gekennzeichnet, dass** mindestens ein Gewindeloch sowohl in dem eingebetteten Teil als auch in dem Leichtmetalllegierungsteil ausgebildet ist.

4. Lager nach Anspruch 3, **dadurch gekennzeichnet, dass** mindestens eines der Löcher von der Öffnung bis zum eingebetteten Teil glatt ist und in dem eingebetteten Teil (3) und zumindest teilweise darüber hinaus in Richtung des Grunds des Lochs mit einem Gewinde versehen ist.

5. Lager nach einem der vorhergehenden Ansprüche, **dadurch gekennzeichnet, dass** der eingebettete Teil (3) und der mit der Kappe in Kontakt stehende Teil (4, 5) zumindest teilweise parallel sind.

6. Lager nach einem der vorhergehenden Ansprüche, **dadurch gekennzeichnet, dass** der eingebettete Teil (3) und der mit der Kappe in Kontakt stehende Teil (4, 5) durch einen abgerundeten Teil (6) verbunden sind, der mit der konkaven zylindrischen Fläche versehen ist.

7. Lager nach einem der vorhergehenden Ansprüche, **dadurch gekennzeichnet, dass** es zwei Schrauben pro Kappe umfasst.

8. Lager nach einem der Ansprüche 1 bis 6, **dadurch gekennzeichnet, dass** es vier Schrauben pro Kappe umfasst.

9. Lager nach einem der vorhergehenden Ansprüche, **dadurch gekennzeichnet, dass** der Einsatz (2) aus Gusseisen hergestellt ist.

10. Einsatz (2) für ein Kurbelwellenlager, das zur Anordnung in einem Leichtmetalllegierungsteil (1) ausgeführt ist und einen Außenteil (4, 5), der mit mindestens einer ebenen Fläche versehen ist und der von mindestens einem glatten Loch (13) durchquert wird, umfasst, **dadurch gekennzeichnet, dass** der Einsatz (2) einen inneren Teil (3) aufweist, der von dem Außenteil entfernt ist und Abschnitte (7) des Leichtmetalllegierungsteils (1) festklemmen kann, wobei durch den inneren Teil mindestens ein Gewindeloch (7) verläuft, das auf das glatte Loch ausgerichtet ist.

11. Einsatz nach dem vorhergehenden Anspruch, **dadurch gekennzeichnet, dass** der Einsatz einen Verbindungsteil (6) umfasst, der mit einer konkaven zylindrischen Fläche (6a) versehen ist.
